Europäisches Patentamt

European Patent Office

Office européen des brevets

(19)

(11) **EP 1 457 863 A2**

(12) **EUROPEAN PATENT APPLICATION**

(43) Date of publication:
**15.09.2004 Bulletin 2004/38**

(51) Int Cl.7: **G06F 3/00**

(21) Application number: **04005396.9**

(22) Date of filing: **06.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **11.03.2003 EP 03005293**

(71) Applicant: **Fraunhofer-Gesellschaft zur
Förderung der angewandten Forschung e.V.
80686 München (DE)**

(72) Inventors:
• **Fleischmann, Monika
53111 Bonn (DE)**

• **Straus, Wolfgang
53111 Bonn (DE)**
• **Li, Yinlin
53229 Bonn (DE)**
• **Grönegress, Christoph
53113 Bonn (DE)**

(74) Representative:
**Hilleringmann, Jochen, Dipl.-Ing. et al
Patentanwälte
von Kreisler-Selting-Werner,
Postfach 10 22 41
50462 Köln (DE)**

(54) **Gesture-based input device for a user interface of a computer**

(57)    The gesture-based input device for a user interface of a computer comprises two pairs of electrodes scalable for any screen size wherein the electrodes are arranged to capture the quasi-electrostatic field surrounding the user in order for the graphic user interface to provide different options or tasks to be selected by a user, a platform for supporting a user, a quasi-electrostatic field generator source connected to the platform and a circuitry connected to the electrodes for determining, relative to each of the electrodes, the position of that part of a user supported by the platform, e.g. a user's hand, being closest to the electrodes. The position of the part of the user in each dimension of the electrodes array is determined based on the relation of two voltage signals of the circuitry, respectively, each voltage signal indicating the distance between the part of the user and the respective electrode, whereby the position within the sensor detection range closest to the part of the user is determined without any calibration of the system for the user.

Fig.6

EP 1 457 863 A2

## Description

## Technical Application Area

The present invention relates to a gesture-based input device for a user interface of a computer and a new interface technology enabling gesture-based navigation and interaction, searching, browsing and selection of web pages and multimedia content graphical user interfaces (GUIs).

## State of the Art - Drawbacks of current technology

The most commonly used technologies for gesture-based interfaces include data gloves, computer vision techniques and magnetic or infrared sensors. Data gloves are expensive and also restrains users to a device; also, data gloves are not suitable for use in public spaces. Computer vision systems are sensitive to lighting conditions and have a comparably low update rate, though they can be quite accurate. But vision systems often force the user to adapt a new means of interaction (e.g. head or eye movement). Infrared and magnetic sensors also require the user to wear a device. EFS-based navigation techniques require users to undergo tedious calibration procedures.

Moreover, gesture-based touchless input devices for user interfaces of computers are known using cameras for determining the position and gesture of e. g. a user's hand. Examples of these technologies are described in DE-A-42 01 943, DE-A-199 18 072, DE-A-100 07 891, DE-A-100 56 291, US-B-6 252 598, JP-A-09258945 and JP-A-10031551.

Moreover, from DE-A-43 12 672 a touchless cursor-control-like input device for computers is known which comprises proximity switches for controlling cursor movement and other functions. Each proximity switch functions based on a capacitance measurement. These switches cannot detect the position of for example a user's finger within their sensitive area but can merely detect that within the sensitive area a user's finger is located.

Moreover, EP-A-0 698 858 describes a touchscreen based on capacitive sensors which can reduce the noise. The sensor detects the current change of the antenna to locate the finger position. This technology requires touching the surface of the screen.

Finally, US-A-6,457,585 describes a data input device wherein the user needs to wear a data glove. This known system works on the propagated radio signal length for transmitting the hand gesture status from the data glove.

## Solution provided by the New Development

The invention provides a gesture-based input device for a user interface of a computer comprising

- two pairs of electrodes scalable for any screen size wherein the electrodes are arranged to capture the quasi-electrostatic field surrounding the user in order for the graphic user interface to provide different options or tasks to be selected by a user,
- a platform for supporting a user,
- an quasi-electrostatic field generator source connected to the platform and
- a circuitry connected to the electrodes for determining, relative to each of the electrodes, the position of that part of a user supported by the platform, e. g. a user's hand, being closest to electrodes,
- wherein the position of the part of the user in each dimension of the electrodes is determined based on the relation of four voltage signals of the circuitry, respectively, each voltage signal indicating the distance between the part of the user and the respective electrode limiting the respective dimension of the electrode array,
- whereby the position within the electrode closest to the part of the user is determined without any calibration of the system for the user.

Individual embodiments of the invention are referred to in the dependent claims.

The system according to the invention is an alternative to the computer mouse or the touchscreen, because it allows the user to command and control the cursor via plain pointing gestures. The system can be used with all standard monitors and especially (large) wall projections. The interface according to the invention does not require users to wear or hold dedicated devices; in addition it does not need to be calibrated for different users. It is thus easy to maintain and protect from damage. The system is thus aimed at information systems in public spaces, such as information kiosks or multimedia display windows, which constantly have to cope with these issues.

## Basic Features of the Solution

Using a quasi-electrostatic field generator, the system according to the invention generates a weak electric field that is then coupled to the body of the user. Body movement (e.g. by arm or hand) results in a change of the electric field, which in turn is measured and analysed by the system in order to measure the proximity to each of the electrodes; the exact position of the arm or hand can then be computed using special approximation techniques. An algorithm allows it to use the system without prior calibration. Users can therefore control the cursor on the screen by simple pointing gestures. Objects can be selected by e.g. pointing at the same object for few seconds.

The technology is largely built on two areas: the hardware developed is based on highly sensitive quasi-electrostatic field sensor (QEFS) and an array of electrodes. The software was designed and implemented to analyse the user interaction via the sensor array and estimate the arm position from it in order to enable browsing and selection. This includes an algorithm for adaptive relative reference which compensates for omitted calibration step.

## Improvements and Advantages over the State of the Art

The system according to the invention is a non-contact interface that doesn't require the user to calibrate the system or wear a device. He can interact with the computer by pointing at the screen in a very natural and playful way. It provides good resolution and a high update rate (up to 1kHz) for browsing web pages and multimedia applications.

The invention will be described in more detail herein below referring to the drawing in which

Fig. 1    shows an embodiment of the invention (referred to as Info-Jukebox),

Fig. 2    shows a principle of the sensor,

Fig. 3    shows a natural electromagnetic field around human body,

Fig. 4    shows an enhanced human body electromagnetic field,

Fig. 5    shows an electronic circuit model for the sensor, and

Fig. 6    shows an electrode array for the sensor.

## Example

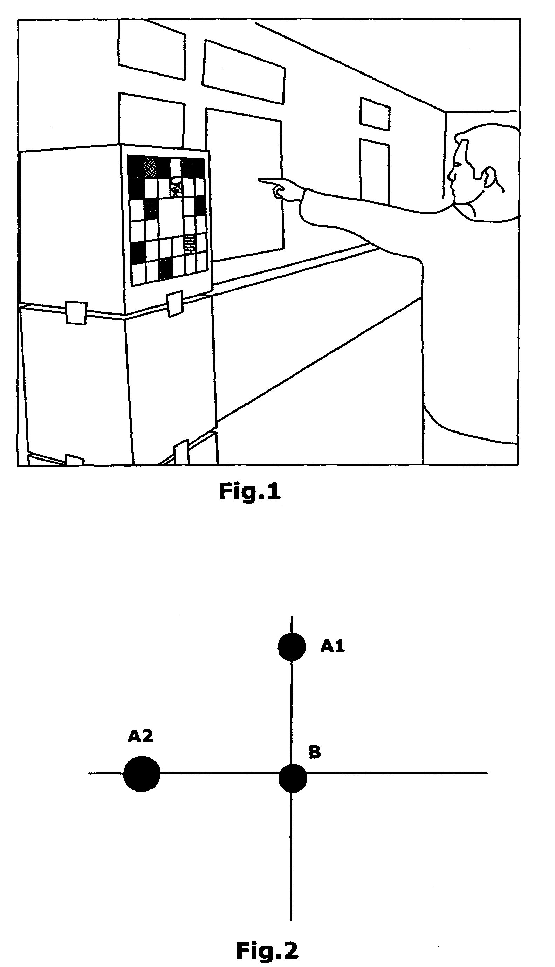

The Info-Jukebox is a multimedia archive installation for public spaces (see Fig. 1). It presents collections of multimedia information on a multi-screen (on multiple screens) which can be accessed via a gesture-based interface. ECCO-sensors translate simple pointing gestures into screen coordinates in order to control the cursor. The selected information (e.g. videos) is presented on the navigation space as well as on a large projection to ensure that the Info-Jukebox can be installed in large public spaces.

## Technical Principle

In order to ensure the basic functionality of the jukebox, two types of information are necessary: one is the position of the cursor, and the other is selection of an item. Both parameters should be determined from the user's arm position. And indeed, one can do so by applying basic physics theory: It is well-known that capacitance C exists between two objects and C is proportional to

$$C \propto \frac{K}{d} \qquad (1.1)$$

where d is the distance between the two objects and K is the factor of the object characteristic and environment effect.

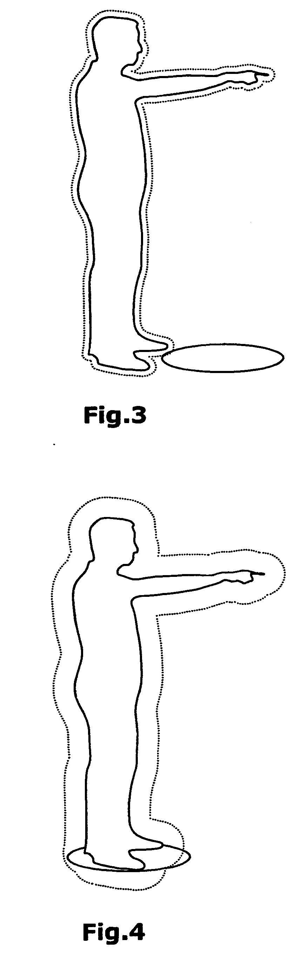

The capacitance C is a basic parameter in electronic science. By obtaining the value C, the distance between the two objects can be determined. Moreover, if two objects A1 and A2 are placed at fixed positions (see Fig. 2) in a coordinate system, the position of the new object B can be determined by measuring the capacitance between the object pairs A1B and A2B.

This is the basic principle underlying in the sensor of the present invention. B corresponds to the arm of the user. A1 and A2. Once the distance is measured between A1 and B and A2 and B, one can infer the position of the object B. By means of suitable software routines, one can move the cursor on the screen in accordance with the movement of the arm.

It is widely known that the human body can radiate (or reflect) energy in the form of heat, infrared waves, electromagnetic power and others. Especially, the electromagnetic field is most closely related to the body, since it may be caused by the biochemical effects in the cells, friction of clothes, space electric field induction or coupled from power cable. This is why sometimes people may feel shocked by body electricity, especially when one takes off his/her wool sweater in dry winter day. Indeed, the human body is surrounded by an electromagnetic field more or less all the time, as can be seen in Fig. 3.

Given such field, body gestures can be captured by suitable sensors and then translated into computer commands. One of the most common gestures in life is finger or arm pointing gesture. This kind of gesture language has been widely adopted in human computer interfaces based, for example, on computer vision or others. Once it is possible to detect the change of the field caused by body movements, one can use it to control computers in some ways, e.g. to navigate a screen cursor or to emulate isolated buttons on the keyboard.

Unfortunately, the natural electromagnetic field around the human body is extremely weak and difficult to deal with for human computer interaction, whereas artificially created fields are easier to control.

When the body is immersed in an electromagnetic field, it will become a medium or path for the field and extends to the surrounding environment as illustrated in Fig.4. In fact, the human body field or energy can be enhanced in this way to invisibly extend the measurable size of the body.

In the method, the enhanced field is measured by a voltage coupled solution accompanied by a custom-designed array of four or more electrodes.

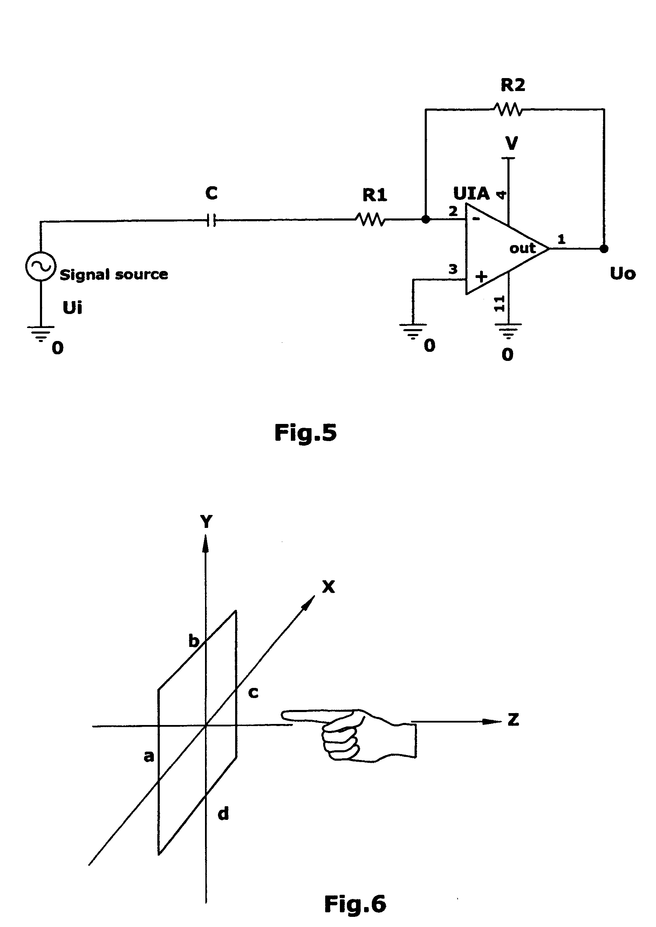

The principle of the sensor may be expressed in the model of Fig. 5.

When the user is enhanced by the artificial field, the field around him can be regarded as a signal source represented in the model as Ui. When the user moves his arm close to the electrode(s), the path between user and sensor electrode can be described as the equivalent capacitance C in the model, via which the signal passes to the front processing circuit and then to the computer.

From Fig. 5, the output of the electrode Uo can be obtained as follows:

$$|Uo| = \frac{R2}{\sqrt{R1^2 + \frac{1}{(2\pi fC)^2}}}|Ui| \qquad (0.1)$$

where

$|Uo|$ and $|Ui|$ are the amplitude of the signal,
$R1$ and $R2$ are the resistors used, and
$f$ is the frequency of the signal

Since $f$ is in the range kHz and $C$ is in pF unit, $R1 << \frac{1}{(2\pi fC)^2}$. It follows that,

$$|Uo| \approx 2\pi fCR2|Ui| \qquad (0.2)$$

So the measured amplitude of Uo contains the distance information of arm and electrode.

For different users however, the electrical property is different. It is impossible to couple the same voltage strength $Ui$ to everyone without careful calibration. In order to overcome this shortcoming, an array of electrodes as demonstrated in Fig. 6 is used.

The prototype electrode array is made from a metal film accounting to the four electrodes. Compared to the size of the hand, it can be regarded as the line and point problem for capacitance which, resulting in homogeneous reception characteristics for the electrode array

The prototype array consists of four electrodes and each has a processing circuit as discussed above (cf. Fig. 5). If we name the signal from electrode a as $|Uo|_L$ and the signal from the electrode c as $|Uo|_R$ one can infer

$$V_H = \frac{|Uo|_L}{|Uo|_R} = \frac{C_L}{C_R} \qquad (0.3)$$

$C_L$ and $C_R$ are equivalent capacitance between the arm and the electrodes **a, c,** respectively.

Since capacitance is proportional to

$$C \propto \frac{K}{d} \qquad (0.4)$$

where $d$ is the distance between the two objects and $K$ is the factor of the object characteristic constant and environment effect. Thus:

$$V_H \approx \frac{d_R}{d_L}$$

$d_L$ is the distance between the user's hand and electrode **a**, and likewise for $d_R$ to electrode **c**. From this equation, it can be seen that the value of $V_H$ includes the horizontal relative distance information between the user's hand and the electrode. Furthermore, we can cancel out the uncontrollable effects to the environment interference and the calibration process become unnecessary which are generally required in most of this kind of application. Likewise, we can infer the vertical relative distance information from $V_V$, Thus:

$$V_V \approx \frac{d_T}{d_B}$$

$d_T$ is the distance between the user's hand and electrode b, and likewise for $d_B$ to electrode d.

The maximum and minimal value of the $V_H$ is recorded as $V_{H\,max}$ and $V_{H\,min}$ respectively. Then the horizontal location can be defined as,

$$X = \frac{V_H}{V_{H\,max} - V_{H\,min}}.L_X$$

$L_X$ is the horizontal length of the screen.

The vertical location is then,

$$Y = \frac{V_V}{V_{V\,max} - V_{V\,min}}.L_Y$$

$L_Y$ is the vertical length of the screen.

Since the maximal and minimal value of $V_H$ and $V_V$, or $V_{H\,max}$, $V_{H\,min}$, $V_{V\,max}$, $V_{V\,min}$, are the screen boundary value for each user's hand moving range, which depends on the user habit, the dynamic determination of these boundary values provide the flexibility for the user hand movement. Meanwhile, $V_H$ and $V_v$ is less affected by distance from hand to the screen surface and this method also enable the user to move one's hand forward or backward freely before the screen while the cursor keeps still.

For the selection control, Objects can be selected by pointing at them for some time (between 1-2 seconds). The cursor control is enabled by raising the arm and terminated by dropping it. When the arm is raised, the signal strength of all four signals will increase, with the opposite effect when the arm is dropped.

## Claims

1. Gesture-based input device for a user interface of a computer comprising

   - two pairs of electrodes scalable for any screen size wherein the electrodes are arranged to capture the quasi-electrostatic field surrounding the user in order for the graphic user interface to provide different options or tasks to be selected by a user,
   - a platform for supporting a user,
   - a quasi-electrostatic field generator source connected to the platform and
   - a circuitry connected to the electrodes for determining, relative to each of the electrodes, the position of that part of a user supported by the platform, e.g. a user's hand, being closest to electrodes,
   - wherein the position of the part of the user in each dimension of the electrodes is determined based on the relation of four voltage signals of the circuitry, respectively, each voltage signal indicating the distance between the part of the user and the respective electrode,
   - whereby the position within the electrode closest to the part of the user is determined without any calibration of the sensor system

2. Gesture-based input device according to claim 1, wherein

$$V_H = \frac{|Uo|_L}{|Uo|_R}$$

$$V_V = \frac{|Uo|_B}{|Uo|_T}$$

is utilized to cancel the environment effect which at the same time remove the calibration process before the user to use it. $U_o$ is the output signal from the correspondent electrode.

3. Gesture-based input device according to claim 1 or 2, usable to provide the flexibility for user to define the hand movement range according to one's habit, wherein

$$X = \frac{V_H}{V_{H\ max} - V_{H\ min}} . L_X$$

$$Y = \frac{V_V}{V_{V\ max} - V_{V\ min}} . L_Y$$

it also provide the possibility for the user to move forward and backward freely before the screen in a range of around 1 meters.

4. Gesture-based input device according to claim 2, wherein, when the determined position of the part of the user is left substantially unchanged for a predetermined period of time, this is interpreted as selecting an option or task offered to the user through the user interface represented by the QEFS field.

5. Gesture-based input device according to any one of claims 1 to 3, wherein the sensor field comprises a screen and a cursor moved and positioned according to the movement and position of the part of the user.

**Fig.1**

**Fig.2**

**Fig.3**

**Fig.4**

**Fig.5**

**Fig.6**